# EUROPÄISCHE PATENTSCHRIFT

(11) **EP 3 234 414 B1**
(45) Veröffentlichungstag und Bekanntmachung des Hinweises auf die Patenterteilung: **05.05.2021**
(21) Anmeldenummer: 15805198.7
(22) Anmeldetag: 07.12.2015
(51) Int. Cl.: F16H 63/34

(54) **PARKSPERRENANORDNUNG**
PARK LOCKING ASSEMBLY
SYSTÈME DE FREIN DE STATIONNEMENT

(30) Priorität: 17.12.2014 EP 14198565; 09.09.2015 DE 102015115195
(43) Veröffentlichungstag der Anmeldung: 25.10.2017
(73) Patentinhaber: Magna PT B.V. & Co. KG, 74199 Untergruppenbach (DE)
(72) Erfinder: JANSEN, Julia, 71636 Ludwigsburg (DE); BURGARDT, Georg, 74626 Bretzfeld (DE)
(74) Vertreter: Rausch, Gabriele
(86) Internationale Anmeldenummer: PCT/EP2015/078858
(87) Internationale Veröffentlichungsnummer: WO 2016/096511

(56) Entgegenhaltungen:
- CN-U- 202 659 781
- DE-A1- 2 101 822
- DE-A1- 10 316 949
- DE-A1-102010 027 826
- DE-A1-102013 106 303
- JP-A- 2011 098 677
- JP-U- H0 187 068

## Beschreibung

Die vorliegende Erfindung betrifft eine Parksperrenanordnung für ein Kraftfahrzeuggetriebe, mit einem Parksperrenrad, das eine Verzahnung mit Zähnen und Zahnlücken aufweist, mit einer Parksperrenklinke, die einen Klinkenzahn aufweist, der zur Einrichtung einer Parksperrenposition in eine Zahnlücke greifen kann, und mit einem Betätigungsmechanismus, der ein Betätigungsglied zum Betätigen der Parksperrenklinke von einer Freigabeposition in die Parksperrenposition aufweist, wobei das Betätigungsglied über eine Einrückfeder mit der Parksperrenklinke gekoppelt ist, wobei die Einrückfeder zum Einrichten der Parksperrenposition Energie speichert, falls der Klinkenzahn in einer Auflageposition auf einem Zahn des Parksperrenrades aufliegt.

Parksperrenanordnungen der oben beschriebenen Art sind allgemein bekannt und dienen in Kraftfahrzeugen, die ein automatisiertes Getriebe besitzen, zum Immobilisieren des Kraftfahrzeuges im Stillstand.

Das Parksperrenrad ist dabei in der Regel mit einer Ausgangswelle eines Kraftfahrzeuggetriebes verbunden. Die Parksperrenklinke ist in der Regel verschiebbar oder verschwenkbar an einem Gehäuse des Kraftfahrzeuggetriebes gelagert. Häufig ist die Parksperrenklinke mittels einer Feder in die Freigabeposition vorgespannt. Der Betätigungsmechanismus kann manuell betätigt werden und zu diesem Zweck beispielsweise mit einem Schalthebel im Innenraum des Kraftfahrzeuges gekoppelt sein. Der Betätigungsmechanismus kann jedoch auch mittels eines Aktuators betätigt werden.

Zum Versetzen der Parksperrenklinke von der Freigabeposition in die Parksperrenposition sind Mechanismen bekannt, um ein Betätigungsglied in einer linearen Richtung zu versetzen, wobei das Betätigungsglied über eine Einrückfeder mit einem Ziehkeil verbunden sein kann, der an der Parksperrenklinke angreift. Alternativ ist es bekannt (DE 20 2008 001 760 U1), dass der Betätigungsmechanismus einen Nocken aufweist, der um eine zu der Parksperrenradachse parallele Achse verschwenkbar gelagert ist. Das Betätigungsglied ist in diesem Fall eine Welle, an der der Nocken begrenzt verdrehbar ist, wobei die Betätigungswelle und der Nocken über eine Einrückfeder gekoppelt sind.

Die Einrückfeder nimmt beim Betätigen Energie auf, falls der Klinkenzahn in einer sog. Auflageposition auf einem Zahn des Parksperrenrades aufliegt. Sobald das Kraftfahrzeug etwas weiter rollt und folglich das Parksperrenrad verdreht wird, gelangt der Klinkenzahn in Ausrichtung mit einer Zahnlücke des Parksperrenrades und wird über die in der Einrückfeder gespeicherte Energie in die Zahnlücke gedrückt, um die Parksperrenposition einzurichten.

Parksperrenanordnungen der oben beschriebenen Art sind generell dazu ausgelegt, dass die Parksperrenposition auch dann eingerichtet werden kann, wenn eine Relativgeschwindigkeit zwischen Parksperrenrad und Parksperrenklinke vorliegt, die kleiner ist als eine relativ geringe Schwellengeschwindigkeit, also bei einem Rollen des Fahrzeuges. Hierdurch kann die Sicherheit erhöht werden.

Andererseits sind Parksperrenanordnungen der oben beschriebenen Art so ausgelegt, dass bei einer Relativgeschwindigkeit oberhalb der Schwellengeschwindigkeit zwischen Parksperrenklinke und Parksperren rad, also beispielsweise während der Fahrt des Kraftfahrzeuges, ein Einrichten der Parksperrenposition verhindert wird. Denn eine derartige Betätigung hätte möglicherweise eine Zerstörung der Parksperrenanordnung oder von Teilen des Kraftfahrzeuggetriebes zur Folge.

Eine Klinkenkontaktfläche der Parksperrenklinke und/oder eine Zahnkontaktfläche der Zähne der Parksperrenradverzahnung sind dabei vorzugsweise so geformt, dass die Parksperrenklinke abgewiesen wird, beispielsweise durch eine Art Keilgeometrie, durch Anbringen von Fasen oder dergleichen. Wenn bei einer Relativgeschwindigkeit oberhalb der Schwellengeschwindigkeit die Parksperrenklinke in Richtung des Parksperrenrades bewegt wird, gelangen die Kontaktflächen in Anlage, was der der Auflageposition entspricht. Durch die speziellen Geometrien der Kontaktflächen wird die Parksperrenklinke dabei gegen die Kraft der Einrückfeder in Richtung der Freigabeposition abgewiesen, also in diese Richtung gestoßen.

Aus dem Dokument EP 1 895 206 A1 ist es bekannt, die Flächen bzw. Konturen von Klinkenkontaktfläche und Zahnkontaktfläche so auszugestalten, dass die Klinke bei höheren Geschwindigkeiten mit geringer maximaler Impulsgröße abgewiesen wird, um mechanische Beanspruchungen gering zu halten. Die Konturen können dabei beispielsweise einer logarithmischen Funktion entsprechen.

Sofern eine Parksperrenklinke nur durch eine Feder in die Freigabeposition vorgespannt ist, kann es bei starken oder stoßartigen Bewegungen des Kraftfahrzeuges zu einer Auslenkung der Parksperrenklinke gegen diese Federkraft kommen, obgleich die Parksperre nicht betätigt wird. Aus dem zuvor genannten Dokument DE 20 2008 001 760 U1 ist es daher bekannt, die Parksperrenklinke in der Freigabeposition mittels einer Führungseinrichtung formschlüssig zu halten. Ein diesbezüglich vergleichbarer Ansatz ist auch aus dem Dokument EP 2 657 578 A2 bekannt, das eine Betätigung einer Parksperrenklinke mittels einer Schaltwalze offenbart, an der ein sich um die Walzenachse herum erstreckender Führungsabschnitt ausgebildet ist, in den ein mit der Parksperrenklinke verbundener Stift greift.

Bei solchen zwangsgeführten Parksperrenklinken kann zwar ein Betätigen der Parksperrenanordnung aufgrund von Vertikalbewegungen des Kraftfahrzeuges oder dgl. vermieden werden. Fehlbetätigungen sind jedoch nicht ausgeschlossen, weder bei einer manuellen Bedienung, wie sie in dem Dokument DE 20 2008 001 760 U1 offenbart ist, noch bei automatisierten Betätigungen, wie sie in dem Dokument EP 2 657 578 A2 genannt sind. Bei einer solchen Fehlbedienung kommt die oben beschriebene Abweisegeometrie zum Tragen.

Trotz dieser Maßnahme kann es jedoch eine Geschwindigkeit oberhalb der oben genannten Schwellengeschwindigkeit geben, bei der trotz diverser Maßnahmen ein Einfallen der Parksperrenklinke in eine Zahnlücke nicht ausgeschlossen ist. Ein derartiges Phänomen bzw. eine solche Geschwindigkeit wird auch als "Second Drop-in Speed" bezeichnet.

DE 103 16 949 A1 betrifft eine Parksperre für ein Kraftfahrzeug. Hierbei wird vorgeschlagen, zum Betätigen einer Parksperre einen Kniehebelmechanismus einzusetzen, der wenigstens zwei Schenkel und ein gemeinsames Kniegelenk aufweist.
Der Stand der Technik löst das Problem, nicht, dass Schwingungen reduziert werden, um ein Einfallen der Parksperrenklinke bei bewegtem Fahrzeug zu verhindern.

JP 2011 098677 A betrifft ebenfalls eine Parkverriegelungsvorrichtung mit einem Verriegelungshebel und einem Nocken, die jeweils flache Oberflächen aufweisen, die in Oberflächenkontakt miteinander gebracht werden, während der Verriegelungshebel mit einem Parkgetriebe in Eingriff steht.

DE 10 2010 027 826 A1 beschreibt eine Parksperre, welche ein Sperrzahnrad, eine Sperrklinke sowie eine Verriegelungsvorrichtung für die Sperrklinke aufweist. Im Fall einer Zahn-Zahn-Stellung drückt ein Riegel mit seiner Schräge auf ein Endstück der Sperrklinke, wodurch die Sperrklinke mit einer gegen die Kraft der Schenkelfeder wirkenden Kraft in die Verriegelungsstellung rutscht.

DE 2 101 822 A1 betrifft eine Parkbremse, welche eine Bremsklaue aufweist, die in und außer Eingriff mit einem Parkritzel schwenkbar ist, wobei eine Federeinrichtung vorgesehen ist, die die Bremsklaue außer Arbeitsberührung mit dem Parkritzel drückt. Über einen Nocken wird die Bremsklaue angedrückt.

CN 202 659 781 U betrifft eine Parksperrenvorrichtung mit einer fächerförmigen Platte mit einem Nockenabschnitt, einer Bremsklaue und einer Torsionsfeder. Relative Bewegungen der fächerförmigen Platte und der Bremsklaue werden durch eine Vorspannungskraftdifferenz zwischen der Torsionsfeder und einer weiteren Feder realisiert.

JP H01-87 068 A beschreibt eine Parksperrenanordnung, welche durch Ein- und Ausrücken eines Betätigungselements quer zu einem Sperrhebel betätigt wird.

Vor diesem Hintergrund ist es eine Aufgabe der Erfindung, eine verbesserte Parksperrenanordnung anzugeben, die insbesondere hinsichtlich der Sicherheit gegenüber einem Einrichten der Parksperrenposition bei höheren Geschwindigkeiten verbessert ist.

Diese Aufgabe wird gemäß der vorliegenden Erfindung mittels einer Parksperrenanordnung für ein Kraftfahrzeuggetriebe nach Anspruch 1 gelöst.

Vorteilhafte Ausführungsformen der Erfindung ergeben sich aus den abhängigen Ansprüchen.

Die Anschlageinrichtung begrenzt folglich eine Auslenkung der Parksperrenklinke von dem Parksperrenrad weg. Es hat sich gezeigt, dass eine solche Wegbegrenzung mittels einer Anschlageinrichtung sicher verhindern kann, dass bei einer höheren Geschwindigkeit des Kraftfahrzeuges und versehentlichem Betätigen der Parksperrenanordnung (sei es manuell oder automatisiert) die Parksperrenklinke in das Parksperrenrad einfallen kann.

Während im Stand der Technik, d.h. ohne eine derartige Anschlageinrichtung, häufig eine bestimmte Geschwindigkeit problematisch ist, die sich aufgrund eines Resonanzfrequenzphänomens ergibt, kann durch die Begrenzung der Auslenkung von der Auflageposition in Richtung der Freigabeposition eine derartige kritische Geschwindigkeit ausgeschlossen werden. Eine Erklärung könnte darin liegen, dass eine solche kritische Frequenz in Bereiche verschoben wird, die außerhalb der normalen Fahrzeuggeschwindigkeitsbereiche liegt.

Das Resonanzverhalten im Stand der Technik ergibt sich vermutlich aufgrund des Zusammenwirkens der Konturen von Zahnkontaktfläche und Klinkenkontaktfläche, der Masse der beteiligten Bauteile, der Geometrie der beteiligten Bauteile (insbesondere Zahnlücke, Zahnbreite), sowie ggf. aus der Kraft der Einrückfeder und dgl.

Bei der versehentlichen Betätigung der Parksperrenanordnung während der Fahrt (bei einer Geschwindigkeit höher als eine Schwellengeschwindigkeit, die beispielsweise im Bereich von 2 bis 25 km/h liegen kann), wird die Parksperrenklinke über die Einrückfeder in Richtung hin zu dem Parksperrenrad gedrückt, von wo die Parksperrenklinke durch geeignete Konturen an der Zahnkontaktfläche bzw. der Klinkenkontaktfläche in der entgegengesetzten Richtung abgewiesen wird.

Folglich ergibt sich durch die Kraft der so gespannten Einrückfeder eine wieder in Richtung hin zu dem Parksperrenrad gerichtete Bewegung der Parksperrenklinke. Durch die Anschlageinrichtung wird der Weg jedoch begrenzt, um den die Klinke gegenüber dem Parksperrenrad mittels der Abweisekonturen ausgelenkt werden kann. Durch die Wegbegrenzung mittels der Anschlageinrichtung wird folglich auch die Auslenkung der Einrückfeder nach dem Abweisen begrenzt, so dass die Parksperrenklinke in der Folge mit einer geringeren Kraft wieder in Richtung hin auf das Parksperrenrad zu beschleunigt wird.

Es versteht sich dabei, dass die Anschlageinrichtung vorteilhaft lediglich dann wirkt, wenn die Parksperrenklinke aus der Auflageposition in Richtung der Freigabeposition zu bewegen ist, während eine Betätigung der Parksperrenklinke in die Parksperrenposition erfolgt. Insbesondere wirkt die Anschlageinrichtung vorzugsweise nur dann, wenn die Einrückfeder gespannt ist, wenn also mit anderen Worten das Betätigungsglied von einer Neutralposition in eine Einrückposition versetzt worden ist.

Sofern die Betätigung aufgehoben wird bzw. der Betätigungsmechanismus eine Rückkehr der Parksperrenklinke in die Freigabeposition ermöglicht oder erzwingt, kommt die Anschlageinrichtung vorzugsweise nicht zur Wirkung.

Folglich ist es mittels der erfindungsgemäßen Parksperrenanordnung und der darin realisierten Anschlaganordnung möglich, die Auslenkung der Parksperrenklinke nur dann in Richtung hin bis zu der Anschlagposition zu begrenzen, wenn der Betätigungsmechanismus zum Bewegen der Parksperrenklinke von der Freigabeposition in Richtung der Parksperrenposition betätigt bzw. bewegt wird.

Die Anschlageinrichtung wird vorzugsweise aufgrund einer mechanischen Kopplung wirksam, ist also beispielsweise mit dem Betätigungsglied gekoppelt. Alternativ hierzu kann die Anschlageinrichtung auch unabhängig von dem Betätigungsmechanismus mittels eines eigenen Anschlageinrichtungs-Aktuators in eine Wirkstellung verbracht werden. Der Anschlageinrichtungs-Aktuator könnte in diesem Fall mittels einer übergeordneten Steuerung für den Fall angesteuert werden, dass der Betätigungsmechanismus aus einer Neutralposition in eine Einrückposition versetzt ist, während eine Fahrzeuggeschwindigkeit größer ist als ein Schwellenwert, der beispielsweise im Bereich von 2 bis 25 km liegen kann, insbesondere im Bereich von 5 bis 25 km, vorzugsweise im Bereich von 7 bis 25 km pro Stunde.

Bei der erfindungsgemäßen Parksperrenanordnung kann die Parksperrenklinke mittels einer Vorspannfeder in die Freigabeposition vorgespannt sein. In diesem Fall ist die auf die

Parksperrenklinke wirkende Kraft der Einrückfeder vorzugsweise größer als jene einer solchen Vorspannfeder, um ein sicheres Einrichten einer Parksperrenposition nach einer Stellung Zahn-auf-Zahn zu gewährleisten. In einer alternativen Ausgestaltung weist der Betätigungsmechanismus ein Kulissenelement auf, das als Drehteil oder als längsverschiebliches Teil ausgebildet sein kann. An einem solchen Kulissenbauteil kann eine Kulisse ausgebildet sein, in die ein mit der Parksperrenklinke gekoppelter Kulissenstift greift. Die Kulisse kann dabei so ausgebildet sein, dass die Parksperrenklinke in der Freigabeposition formschlüssig von der Kulisse gehalten wird, sodass eine Vorspannfeder nicht erforderlich ist.

Gemäß einer besonders bevorzugten Ausführungsform ist der Verschwenkweg von der Auflageposition bis zu der Anschlagposition kleiner als der Verschwenkweg von der Auflageposition in die Parksperrenposition.

Der Verschwenkweg von der Auflageposition in die Parksperrenposition entspricht im Wesentlichen der Zahnhöhe der Verzahnung des Parksperrenrades. Der durch die Anschlageinrichtung bei betätigter Parksperrenanordnung eingerichtete Verschwenkweg von der Auflageposition bis zu der Anschlagposition ist folglich relativ klein. Insbesondere kann dieser Verschwenkweg kleiner sein als das 0,7-fache des Verschwenkweges von der Auflageposition in die Parksperrenposition, insbesondere kleiner als das 0,5-fache.

Ferner ist es vorteilhaft, wenn der Verschwenkweg von der Auflageposition bis zu der Anschlagposition kleiner ist als 10 mm, insbesondere kleiner als 5 mm.

Gemäß der Ausführungsform ist das Betätigungsglied über die Einrückfeder mit einem Übertragungsglied gekoppelt, das in der Parksperrenposition an der Parksperrenklinke anliegt.

Das Übertragungglied ist durch einen Betätigungsnocken ausgebildet, sofern der Betätigungsmechanismus generell rotatorisch ausgebildet ist..

Von besonderem Vorzug ist es , dass ein Anschlagelement zur Begrenzung der Verschwenkbewegung mit dem Betätigungsglied oder mit einem Übertragungsglied verbunden ist, das mit dem Betätigungsglied über die Einrückfeder gekoppelt ist.

Das Anschlagelement kann folglich je nach Position des Betätigungsgliedes bzw. des Übertragungsgliedes in eine solche Position gelangen, dass es eine Anschlageinrichtung zur Begrenzung der Verschwenkbewegung der Parksperrenklinke aus der Auflageposition in Richtung der Freigabeposition bis zu einer Anschlagposition einrichten kann.

Mit anderen Worten kann durch diese Maßnahme erreicht werden, dass das Anschlagelement mit einem Bewegen des Betätigungsgliedes bzw. Übertragungsgliedes mit bewegt wird, also dann eine Anschlagposition bestimmt, wenn die Parksperrenanordnung in Richtung der Parksperrenposition betätigt ist.

Sofern der Betätigungsmechanismus in der Freigabeposition ist, kann die Parksperrenklinke hingegen ungehindert in die Freigabeposition bewegt werden. Generell ist es vorteilhaft, wenn ein Anschlagelement mit dem Betätigungsglied verbunden ist, da dies konstruktiv auf einfache Weise zu realisieren ist.

Generell ist es möglich, dass das Betätigungsglied zum Einrichten der Parksperrenposition in einer Längsrichtung bewegt wird, die parallel oder quer zu einer Verschwenkachse der Parksperrenklinke ausgerichtet sein kann.

Von besonderem Vorzug ist es, dass das Betätigungsglied eine Betätigungswelle ist, an der ein Übertragungsglied in Form eines Betätigungsnockens begrenzt verdrehbar gelagert ist, wobei die Einrückfeder als Drehfeder zwischen der Betätigungswelle und dem Betätigungsnocken wirkt.

Eine Parksperrenanordnung mit einer solchen Betätigungswelle ist aus dem Dokument DE 20 2008 001 760 111 bekannt geworden. Dessen Offenbarungsgehalt soll vorliegend vollumfänglich durch Bezugnahme enthalten sein.

Bei dieser Ausgestaltung ist es bevorzugt, wenn das Parksperrenrad um eine erste Achse an der Getriebewelle verdrehbar ist und wenn die Parksperrenklinke um eine zweite Achse verschwenkbar ist, die parallel zu der ersten Achse ist.

Für diesen Fall ist es ferner von Vorteil, wenn die Betätigungswelle an einer dritten Achse ausgerichtet ist, die parallel zu der ersten Achse und/oder der zweiten Achse ausgerichtet ist.

Der Betätigungsnocken kann unmittelbar an der Parksperrenklinke angreifen. Die Parksperrenklinke kann mit Absätzen ausgebildet sein, an denen der Betätigungsnocken in der Freigabeposition und/oder der Parksperrenposition anliegen kann.

Hierbei ist es ferner vorteilhaft, dass das Anschlagelement als Anschlagnocken ausgebildet ist, der fest mit der Betätigungswelle verbunden ist.

Der Anschlagnocken kann als Nockenplatte oder als Stift oder dgl. ausgebildet sein.

Von Vorteil ist hierbei, dass mit einer Verdrehung der Betätigungswelle der Anschlagnocken erst dann in eine Position gelangt, bei der er eine Anschlagposition definiert, wenn der Betätigungsmechanismus betätigt wird, die Betätigungswelle also verdreht wird.

Der Anschlagnocken ist axial ausgerichtet mit oder axial benachbart zu dem Betätigungsnocken angeordnet. Der Anschlagnocken kann beispielsweise als Stift ausgebildet sein, der die Betätigungswelle radial durchsetzt und die zusätzliche Funktion hat, eine Verdrehbarkeit eines Betätigungsnockens gegenüber der Betätigungswelle zu begrenzen.

Dies ermöglicht es, die Anschlageinrichtung auf konstruktive Art und Weise zu bilden, da auch ein Anschlagabschnitt der Parksperrenklinke konstruktiv günstig ausgebildet sein kann.

Insbesondere ist es nämlich hierbei vorteilhaft, wenn die Parksperrenklinke einen Anschlagabschnitt in Form eines Axialvorsprunges aufweist.

Ein solcher seitlicher Axialvorsprung kann einstückig mit der Parksperrenklinke ausgebildet sein, was aus Festigkeitsgründen von Vorteil sein kann. Alternativ kann der Axialvorsprung auch durch ein separates Bauelement ausgebildet sein, das mit der Parksperrenklinke verbunden ist, beispielsweise durch einen Stift, der in eine Bohrung der Parksperrenklinke eingesetzt ist.

Durch die Maßnahme, den Anschlagabschnitt durch einen Axialvorsprung zu bilden, kann der Anschlagabschnitt in axialer Richtung mit einem Anschlagnocken ausgerichtet sein, der an der Betätigungswelle festgelegt ist.

Wie oben erwähnt, ist das Betätigungsglied eine Betätigungswelle.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform einer nicht erfindungsgemäßen Parksperrenanordnung in einer Freigabeposition;
- Fig. 2: die Parksperrenanordnung der Fig. 1 in einer Parksperrenposition;
- Fig. 3: die Parksperrenanordnung der Fig. 1 und 2 in einer Auflageposition;
- Fig. 4: eine schematische Detailansicht eines Details IV der Fig. 3;
- Fig. 5: eine schematische Ansicht einer Ausführungsform einer erfindungsgemäßen Parksperrenanordnung in einer Auflageposition;
- Fig. 6: eine Seitenansicht der Parksperrenanordnung der Fig. 5;
- Fig. 7: eine schematische Darstellung einer Ausführungsform einer nicht erfindungsgemäßen Parksperrenanordnung;
- Fig. 8: eine Schnittansicht entlang der Linie VIII-VIII der Fig. 7;
- Fig. 9/9a: eine perspektivische bzw. schematische Ansicht weiterer Ausführungsformen einer Parksperrenklinke für eine nicht erfindungsgemäße Parksperrenanordnung;
- Fig. 10: eine schematische Darstellung einer weiteren Ausführungsform einer nicht erfindungsgemäßen Parksperrenanordnung in einer Freigabeposition;
- Fig. 11: die Parksperrenanordnung der Fig. 10 in einer Anschlagposition;
- Fig. 12: die Parksperrenanordnung der Fig. 10 in einer Parksperrenposition:
- Fig. 13: eine schematische Darstellung einer weiteren Ausführungsform einer nicht erfindungsgemäßen Parksperrenanordnung in einer Freigabeposition;
- Fig. 14: die Parksperrenanordnung der Fig. 13 in einer Anschlagposition;
- Fig. 15: die Parksperrenanordnung der Fig. 13 in einer Parksperrenposition;
- Fig. 16: eine schematische Darstellung einer weiteren Ausführungsform einer nicht erfindungsemäßen Parksperrenanordnung in einer Freigabeposition;
- Fig. 17: die Parksperrenanordnung der Fig. 16 in einer Anschlagposition;
- Fig. 18: die Parksperrenanordnung der Fig. 16 in einer Parksperrenposition;
- Fig. 19: eine schematische Darstellung einer weiteren Ausführungsform einer nicht erfindungsgemäßen Parksperrenanordnung in einer Freigabeposition;
- Fig. 20: die Parksperrenanordnung der Fig. 19 in einer Anschlagposition; und
- Fig. 21: die Parksperrenanordnung der Fig. 19 in einer Parksperrenposition.

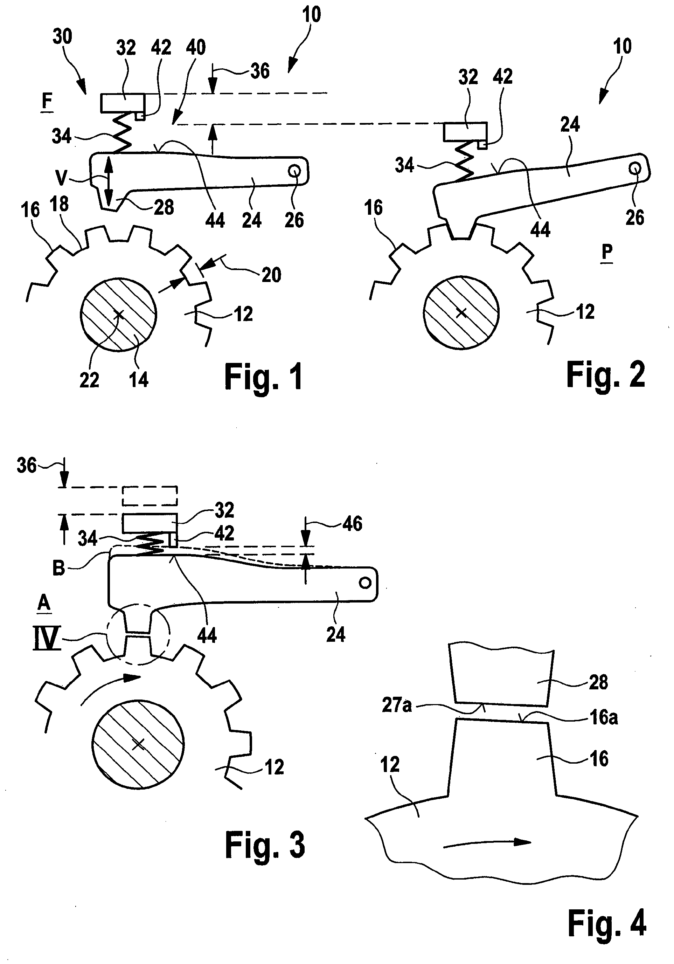

In den Fig. 1 bis 4 ist eine erste Ausführungsform einer nicht erfindungsgemäßen Parksperrenanordnung für ein Kraftfahrzeug schematisch dargestellt und generell mit 10 bezeichnet.

Die Parksperrenanordnung 10 weist ein Parksperrenrad 12 auf, das an einer Getriebewelle 14 drehfest festgelegt ist, beispielsweise an einer Getriebeausgangswelle. An dem Parksperrenrad 12 ist eine Verzahnung mit Zähnen 16 und Zahnlücken 18 ausgebildet. Die Zähne 16 haben eine Zahnhöhe 20. Die Getriebewelle 14 und folglich das Parksperrenrad 12 sind konzentrisch zu einer ersten Achse 22 ausgerichtet.

Die Parksperrenanordnung 10 weist ferner eine Parksperrenklinke 24 auf, die um eine zweite Achse 26 verschwenkbar in Bezug auf das Parksperrenrad 12 gelagert ist, beispielsweise an einem Gehäuse eines Kraftfahrzeuggetriebes. Die zweite Achse 26 ist vorzugsweise parallel zu der ersten Achse 22. Die Parksperrenklinke 24 weist einen Klinkenzahn 28 auf, der an die Verzahnung angepasst ist und in eine Zahnlücke 18 eingeführt werden kann.

Fig. 1 zeigt die Parksperrenanordnung 10 in einer Freigabeposition F, bei der der Klinkenzahn 28 sich nicht in Eingriff mit dem Parksperrenrad 12 befindet. Fig. 2 zeigt die Parksperrenanordnung 10 in einer Parksperrenposition, bei der der Klinkenzahn 28 in eine Zahnlücke 18 der Parksperrenradverzahnung eingefallen ist.

Zum Überführen der Parksperrenanordnung von der Freigabeposition F in die Parksperrenposition P, und optional auch umgekehrt, ist ein Betätigungsmechanismus 30 vorgesehen. Der Betätigungsmechanismus 30 beinhaltet ein Betätigungsglied 32. Das Betätigungsglied 32 wird bewegt, um die Parksperrenklinke 24 von der Freigabeposition F in die Parksperrenposition P zu bewegen. Dabei ist das Betätigungsglied 32 über eine Einrückfeder 34 mit der Parksperrenklinke 24 gekoppelt.

Im vorliegenden Fall wird das Betätigungsglied 32 zum Bewegen der Parksperrenklinke 24 in die Parksperrenposition P in einer Richtung radial in Bezug auf die erste Achse 22 bewegt, also auf einen Rücken der Parksperrenklinke 24 zu. Es versteht sich jedoch, dass das Betätigungsglied 32 auch parallel oder quer zu der ersten Achse 22 bewegt werden kann, beispielsweise zum Ziehen eines Ziehkeils oder dgl. Schließlich kann das Betätigungsglied 32 in manchen Fällen auch verdreht werden, wie es nachstehend noch beschrieben werden wird.

Vorliegend wird das Betätigungsglied 32, wie gesagt, zum Einrichten der Parksperrenposition P linear bewegt, und zwar um einen Betätigungsweg 36 auf die Parksperrenklinke 24 zu.

In manchen Fällen kann die Parksperrenklinke 24 in die Freigabeposition F mittels einernicht dargestellten - Feder vorgespannt sein, wobei die Federkonstante der Einrückfeder 34 in diesem Fall größer ist als jene der Vorspannfeder. Eine Bewegung des Betätigungsgliedes 32 in Richtung hin zu der Parksperrenklinke 24 führt dazu, dass die Parksperrenklinke 24 um die zweite Achse 26 herum verschwenkt wird, so dass der Klinkenzahn 28 in eine Zahnlücke 18 greift, wie es in Fig. 2 zu sehen ist, wodurch die Parksperrenposition P eingerichtet ist. Hierdurch ist ein Fahrzeug, das ein Kraftfahrzeuggetriebe mit einer solchen Parksperrenanordnung 10 aufweist, immobilisiert.

In manchen Fällen kann es während des Betätigungsvorganges dazu kommen, dass der Klinkenzahn 28 auf einem Zahn 16 aufliegt, wie es in Fig. 3 schematisch dargestellt ist. In diesem Fall führt die Bewegung des Betätigungsgliedes 32 um den Betätigungsweg 36 dazu, dass die Parksperrenklinke 24 nicht in eine Zahnlücke 18 einfallen kann. Daher wird die Einrückfeder 34 in diesem Fall komprimiert, so dass darin Energie gespeichert wird. Ausgehend von der Position der Fig. 3, die eine sog. Auflageposition A zeigt, führt ein Rollen des Fahrzeuges und folglich ein Verdrehen des Parksperrenrades in einer beliebigen Richtung dazu, dass der Klinkenzahn 28 in eine benachbarte Zahnlücke 18 einfällt, und zwar aufgrund der in der Einrückfeder 34 gespeicherten Energie. Anschließend ergibt sich wiederum die Parksperrenposition P, wie sie in Fig. 2 gezeigt ist.

Die Auflageposition A der Fig. 3 kann sich im Wesentlichen auch dann ergeben, wenn die Parksperrenanordnung 10 versehentlich betätigt wird, während das Fahrzeug fährt, sich das Parksperrenrad 12 folglich mit einer Drehzahl größer als eine Schwellendrehzahl dreht. Bei kleinen Geschwindigkeiten ist die Drehzahl des Parksperrenrades so gering, dass der Klinkenzahn 28 dennoch in eine Zahnlücke 18 einfallen bzw. einrücken kann. Bei Drehzahlen oberhalb dieser Schwellendrehzahl wird der Klinkenzahn 28 jedoch abgewiesen, kann also nicht in eine der Zahnlücken 18 einfallen. Hierzu können, wie es in Fig. 4 gezeigt ist, an einer Klinkenkontaktfläche 28a oder einer Zahnkontaktfläche 16a Konturen vorgesehen sein, die dafür sorgen, dass die Parksperrenklinke 24 bei jedem Kontakt mit der Verzahnung in radialer Richtung weggedrückt wird. Im einfachsten Fall können die Konturen keilförmig sein, wie es in Fig. 4 dargestellt ist. Die Konturen können jedoch auch eine logarithmische Funktion haben oder eine sonst wie gekrümmte Funktion. Es versteht sich, dass die Kontur generell auf eine bestimmte Fahrtrichtung des Kraftfahrzeuges abgestellt ist, nämlich die Vorwärtsfahrtrichtung. In manchen Fällen kann die Kontur auch für höhere Rückwärtsfahrgeschwindigkeiten ausgelegt sein.

Die Parksperrenanordnung 10 beinhaltet ferner eine Anschlageinrichtung 40. Die Anschlageinrichtung 40 weist ein Anschlagelement 42 auf, das starr mit dem Betätigungsglied 32 verbunden ist. Ferner ist an der Parksperrenklinke 24 ein Anschlagabschnitt 44 ausgebildet, der speziell für diesen Zweck geformt sein kann, jedoch auch, wie in Fig. 3 dargestellt, durch einen Rückenabschnitt der Parksperrenklinke 24 gebildet sein kann.

Die Anschlageinrichtung 40 begrenzt den Verschwenkweg der Parksperrenklinke 24 aus der in Fig. 3 gezeigten Auflageposition A in Richtung hin zu der Freigabeposition F bis zu einer Anschlagposition B, die in Fig. 3 gestrichelt dargestellt ist. In der Anschlagposition B liegt der Anschlagabschnitt 44 an dem Anschlagelement 42 an. Der auf diese Weise begrenzte Verschwenkweg (Anschlagweg) von der Position A in die Position B ist in Fig. 3 mit 46 bezeichnet.

Eine Begrenzung des Anschlagweges 46 auf einen Wert kleiner als die Zahnhöhe 20 kann dazu beitragen, dass ausgeschlossen werden kann, dass der Klinkenzahn 28 bei höheren Drehzahlen oberhalb der Schwellendrehzahl in eine Zahnlücke einfällt. Im Stand der Technik kann dies manchmal für eine oder eine begrenzte Anzahl von Geschwindigkeiten erfolgen, die sich durch Eigenschwingungen bzw. Resonanzfrequenzen des Systems ergeben können. Durch die Begrenzung des Auslenkungsweges der Parksperrenklinke 24 ausgehend aus der Auflageposition A in eine Anschlagposition B kann dieses Phänomen verringert bzw. verhindert werden.

Der Verschwenkweg bzw. Anschlagweg 46 ist vorzugsweise kleiner als 10 mm, insbesondere kleiner als 5 mm.

Bei der Parksperrenanordnung 10 der Fig. 1 bis 4 kann die Einrückfeder 34 direkt auf die Parksperrenklinke 24 wirken, wie es in den Figuren dargestellt ist. Die Betätigungsanordnung 30 kann jedoch auch noch ein weiteres Element aufweisen, wie beispielsweise ein Übertragungselement, das mit der Einrückfeder 34 verbunden ist und das im Betrieb an der Parksperrenklinke 24 anliegt. Ein derartiges Übertragungselement kann in manchen Ausführungsformen beispielsweise ein Ziehkeil sein.

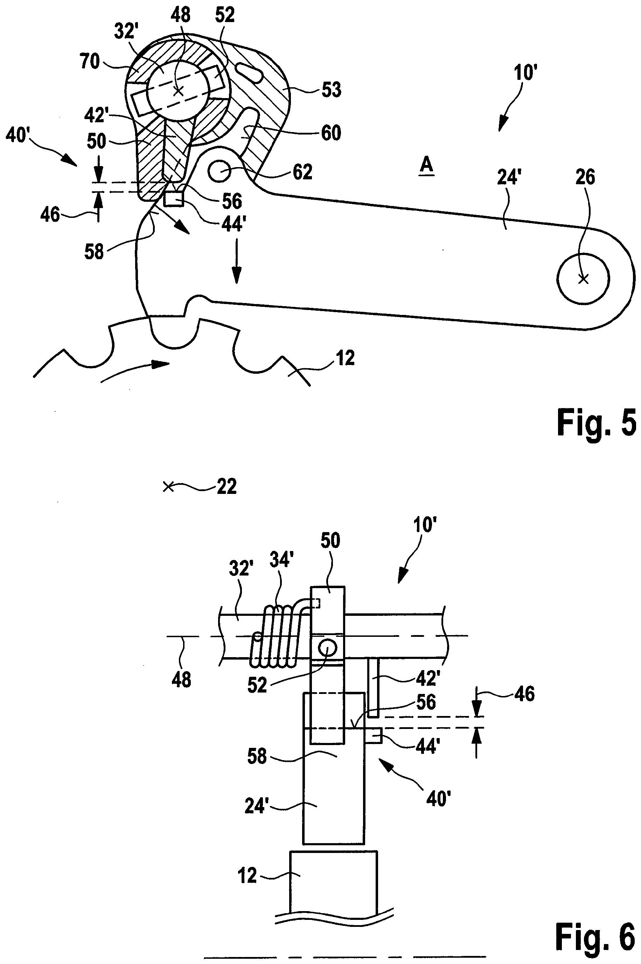

In den Fig. 5 und 6 ist eine erfindungsgemäße Ausführungsform einer Parksperrenanordnung 10' gezeigt, die hinsichtlich Aufbau und Funktionsweise generell der Parksperrenanordnung 10 der Fig. 1 bis 4 entspricht. Gleiche Elemente sind daher durch gleiche Bezugszeichen gekennzeichnet. Im Folgenden werden im Wesentlichen die Unterschiede erläutert.

Bei der Parksperrenanordnung 10' der Fig. 5 und 6 weist der Betätigungsmechanismus 30 ein Betätigungsglied 32' in Form einer Betätigungswelle auf. Die Betätigungswelle 32' ist entlang einer dritten Achse 48 ausgerichtet, die vorzugsweise parallel verläuft zu der ersten Achse 22 und der zweiten Achse 26.

An der Betätigungswelle 32' ist ein Übertragungselement 70 in Form eines Betätigungsnockens 50 begrenzt verdrehbar gelagert. Zu diesem Zweck weist der Betätigungsnocken 50 umfängliche Aussparungen auf, und die Betätigungswelle 32' ist von einem Stift 52 durchsetzt, der in diese Aussparungen eingreift, wie es in Fig. 5 schematisch angedeutet ist. Der Stift 52 kann in einer alternativen Ausführungsform auch so ausgebildet und an der Betätigungswelle 32' festgelegt sein, dass er als Anschlagelement 42 dient. Der Stift 52 ist in diesem Fall vorzugsweise nicht nur etwas länger sondern auch breiter ausgestaltet, und in der richtigen Drehposition an der Betätigungswelle angebracht. Insbesondere ist der Stift 52 für diesen Fall so ausgerichtet, dass er den Anschlagabschnitt 44' erreicht. Eine derartige Ausführungsform kann deswegen bevorzugt sein, weil die Funktion der Begrenzung der Verdrehbarkeit des Betätigungsnockens 50 und die Funktion des Anschlagelementes durch einen einzigen Stift realisiert werden können, der fest mit der Betätigungswelle 32' verbunden wird.

Ferner ist in Fig. 5 ein Kulissenelement 53 dargestellt, das mit dem Betätigungsnocken 50 fest gekoppelt ist und dazu dient, die Parksperrenklinke 24' in der Freigabeposition formschlüssig zu halten, so dass eine Vorspannfeder für diesen Zweck nicht erforderlich ist.

Ferner ist an der Parksperrenklinke 24' ein Parksperrenpositionsabsatz 56 ausgebildet. In der Parksperrenposition liegt ein vorderer Abschnitt des Parksperrennockens 50 auf dem Parksperrenpositionsabsatz 56 auf und verhindert auf diese Weise ein versehentliches Bewegen der Parksperrenklinke 24' in Richtung der Freigabeposition F.

Um die Parksperrenklinke 24' aus dieser Stellung wieder in die Freigabeposition zu versetzen, wird die Betätigungswelle 32' so gedreht, dass der Betätigungsnocken 50 den Parksperrenpositionsabsatz 56 wieder freigibt.

Ausgehend von dem Parksperrenpositionsabsatz 56 in Richtung hin zu dem Parksperren rad 12 ist an der Parksperrenklinke 24' eine Schrägkontur 58 ausgebildet. Die Schrägkontur 58 ist so geformt, dass bei einer Verdrehung des Nockens 50 auf diese zu die Parksperrenklinke 24' in Richtung der Parksperrenposition P gedrückt wird. Dies ist in Fig. 5 durch Pfeile angedeutet.

An der Parksperrenklinke 24' ist ferner ein Stift 62 festgelegt, der sich in eine Kulisse 60 des Kulissenelementes 53 hinein erstreckt, so dass die Parksperrenklinke 24' in einer Freigabeposition formschlüssig gehalten werden kann.

In Fig. 6 ist zu erkennen, dass die Einrückfeder 34' als Spiralfeder ausgebildet ist, die um die Betätigungswelle 32' herum angeordnet ist und an einem Ende mit dem Betätigungsnocken 50 verbunden ist (exzentrisch zu der dritten Achse 48), und am anderen Ende mit der Betätigungswelle 32' selbst.

In den Fig. 5 und 6 ist ferner gezeigt, dass die Anschlageinrichtung 40' ein Anschlagelement 42 in Form eines Anschlagnockens 42' aufweist, der starr mit der Betätigungswelle 32' verbunden ist. Ferner kann an der Parksperrenklinke 24' ein Anschlagabschnitt 44' ausgebildet sein, der nach der Art eines Axialvorsprunges ausgebildet ist und folglich in axialer Richtung mit dem Anschlagnocken 42' ausgerichtet ist. In Fig. 5 ist zu erkennen, dass in einer Position zwischen der Freigabeposition und der Parksperrenposition (Anlage des Betätigungsnockens 50 an der Schrägkontur 58), also beispielsweise in der Anschlagposition A, wie sie in Fig. 5 gezeigt ist, zwischen dem Anschlagelement 42' und dem Anschlagabschnitt 44' ein Anschlagweg 46 eingerichtet ist, der eine radiale Auslenkung in Richtung hin zu der Freigabeposition F begrenzt, wie bei der vorherigen Ausführungsform.

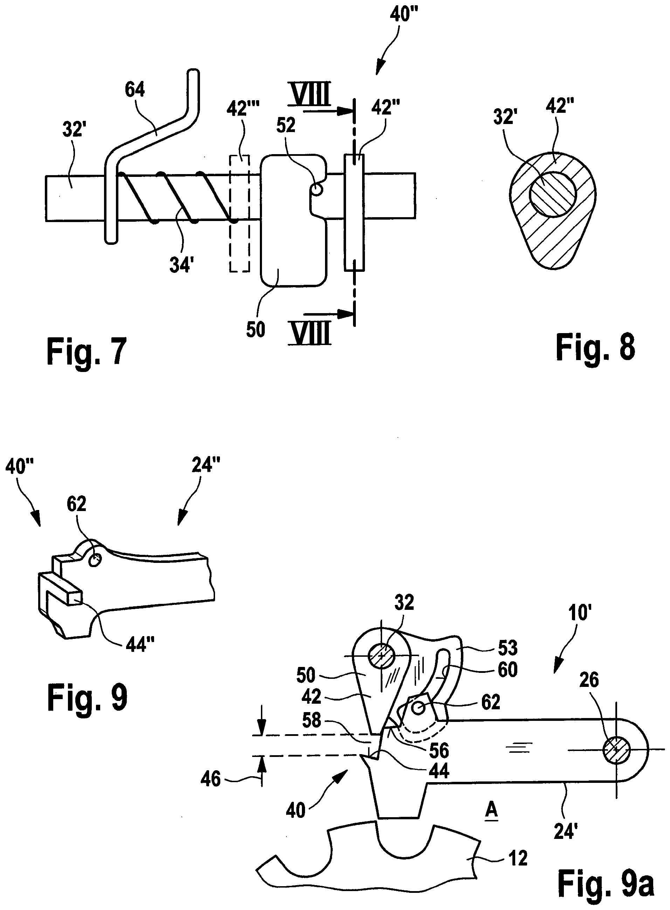

Fig. 7 zeigt eine der Fig. 6 vergleichbare Ansicht einer nicht erfindungsgemäßen Ausführung, wobei zu sehen ist, dass ein Anschlagelement 42" in Form eines Anschlagnockens 42" mit einer Bohrung zur Aufnahme der Betätigungswelle 32' ausgebildet sein kann, wie es in Fig. 8 zu sehen ist. Ferner ist zu erkennen, dass ein solches Anschlagelement 42" auf der einen axialen Seite des Betätigungsnockens angeordnet sein kann oder auf der anderen axialen Seite, wie es bei 42'" gezeigt ist.

Fig. 7 zeigt ferner ein Hebelelement 64, das beispielsweise mit einer Rasteinrichtung in Eingriff stehen kann, um die Freigabeposition F und die Parksperrenposition P durch Rasteingriffe zu unterstützen. Das Hebelelement 64 oder ein weiteres Hebelelement kann jedoch auch mit einem Antrieb zum Verdrehen der Betätigungswelle 32' gekoppelt sein, entweder durch manuelle Betätigung eines Schalthebels oder durch einen Aktuator.

Fig. 9 zeigt eine weitere Ausführungsform einer Parksperrenklinke 24", bei der ein Anschlagabschnitt 44" in Form eines Axialvorsprunges einstückig mit der Parksperrenklinke 24" ausgebildet ist.

In Fig. 9a ist eine Abwandlung der in den Figuren 5 und 6 gezeigten Ausführungsform einer Parksperrenanordnung 10' gezeigt, die nicht die Erfindung darstellt.

Bei der Ausführungsform der Figuren 5 und 6 befinden sich der Parksperrenpositionsabsatz 56 und der Anschlagabschnitt 44' auf der gleichen relativen Höhe in Bezug auf das Parksperren rad 12. In der Parksperrenposition greift der Betätigungsnocken 50 an dem Parksperrenpositionsabsatz 56 an. In der in Fig. 5 gezeigten Auflageposition begrenzt das Anschlagelement 42' die maximale Auslenkung bzw. den Anschlagweg 46, indem der Anschlagabschnitt 44' in Richtung der Freigabeposition F an dem Anschlagelement 42' anschlägt.

Bei der Ausführungsform der Fig. 9a bildet der Betätigungsnocken 50 das Anschlagelement 42. Bei dieser Ausführungsform sind an der Parksperrenklinke 24 ein Anschlagabschnitt 44 und ein relativ zu dem Parksperrenrad 12 hierzu versetzter Parksperrenpositionsabsatz 56 angeordnet. In der Parksperrenposition P liegt der Betätigungsnocken 50 auf dem Parksperrenpositionsabsatz 56 auf, um die Parksperrenklinke 24' sicher in der Parksperrenposition P zu halten. In Fig. 9a ist hingegen die Auflageposition A gezeigt, bei der der Betätigungsnocken 50 an einer in Fig. 9a nicht näher bezeichnete Schrägkontur 58 anliegt. Ferner liegt der Betätigungsnocken 50, der dann in dieser Position als Anschlagelement 42 wirkt, dem Anschlagabschnitt 44 in Form eines Absatzes gegenüber, derart, dass zwischen dem Betätigungsnocken 50 und dem Anschlagabschnitt 44 ein Anschlagweg 46 eingerichtet ist. Im Übrigen entspricht die Parksperrenanordnung 10' der Fig. 9a hinsichtlich Aufbau und Funktionsweise jener Parksperrenanordnung 10', die in den Figuren 5 und 6 gezeigt ist.

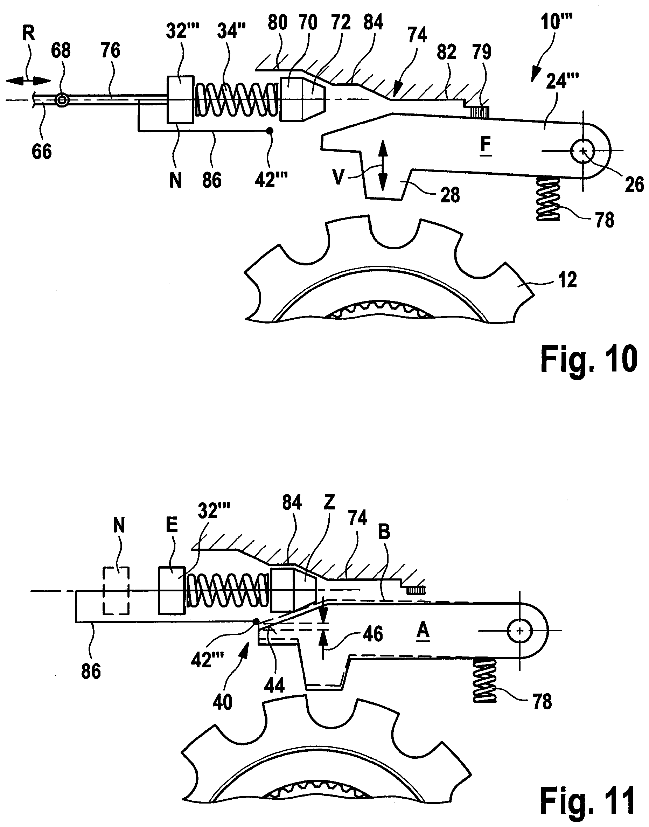

In den Figuren 1 bis 3 ist ein Betätigungsmechanismus gezeigt, der linear etwa parallel zur Verschwenkrichtung V der Parksperrenklinke 24 bewegt wird. In den Figuren 5 bis 9a ist ein Betätigungsmechanismus beschrieben, der vom rotatorischen Typ ist. In den folgenden Figuren 10 bis 21 werden nicht erfindungsgemäße Ausführungsformen von Parksperrenanordnungen beschrieben, bei denen der Betätigungsmechanismus translatorischer Art ist. In allen Fällen ist jedoch eine Anschlageinrichtung 40 vorgesehen, die, wie bei den obigen Ausführungsformen, eine Verschwenkbewegung der Parksperrenklinke 24 aus der Auflageposition A in Richtung der Freigabeposition F bis zu einer Anschlagposition B begrenzt.

Die generelle Funktionsweise der nachstehend beschriebenen Parksperrenanordnungen entspricht folglich jener der oben beschriebenen Figuren. Gleiche Elemente sind daher durch gleiche Bezugszeichen gekennzeichnet. Im Folgenden werden im Wesentlichen die Unterschiede erläutert.

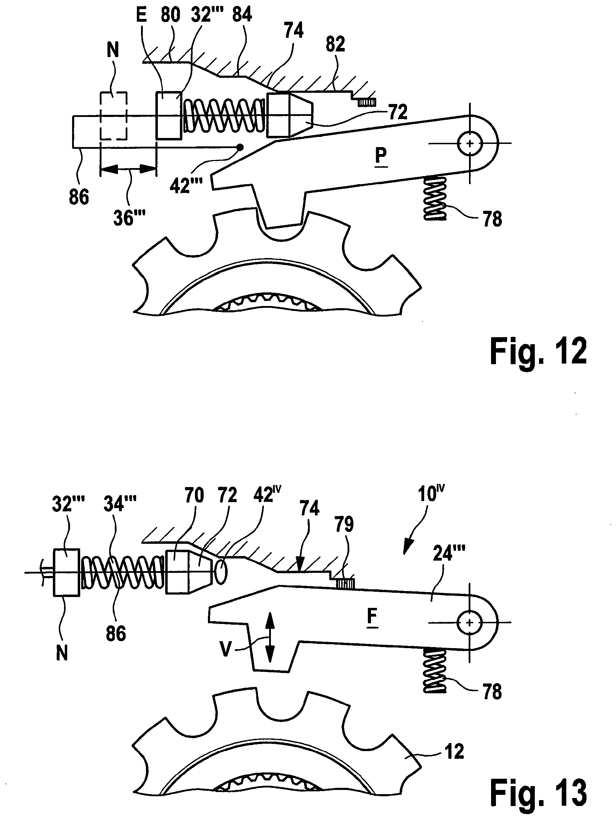

Eine nicht erfindungsgemäßen Parksperrenanordnung 10'" ist in Fig. 10 in einer Freigabeposition F, in Fig. 11 in einer Auflageposition A und in Fig. 12 in einer Parksperrenposition P gezeigt.

Ein Betätigungsmechanismus weist ein im Wesentlichen translatorisch versetzbares Betätigungsglied 32'" auf, das nach der Art einer Stange ausgebildet sein kann. Das Betätigungsglied 32'" wird über ein Antriebsglied 66 im Wesentlichen entlang einer Betätigungsachse 76 versetzt, wobei diese Richtung in Fig. 10 schematisch mit R angedeutet ist. Das Betätigungsglied 32'" ist dabei vorzugsweise über ein Gelenk 68 mit dem Antriebsglied 66 verbunden. Ferner ist das Betätigungsglied 32'" über eine koaxial zu der Betätigungsachse 76 angeordnete Einrückfeder 34'" mit einem Übertragungsglied 70 in der Form eines Betätigungskeiles 72 gekoppelt.

Dem Betätigungskeil 72 ist ein Gehäuseabschnitt 74 eines nicht näher bezeichneten Gehäuses der Parksperrenanordnung 10 bzw. eines Getriebes gezeigt, in dem die Parksperrenanordnung 10 integriert ist.

Die Parksperrenklinke 24'" ist wiederum um eine Klinkenachse 26 verschwenkbar, die windschief zu der Betätigungsachse 76 ausgerichtet ist. Die Verschwenkrichtung V der Parksperrenklinke 24'" im Bereich des Klinkenzahns 28 ist in Fig. 10 bei V angedeutet. Die Richtung R verläuft quer zu der Verschwenkrichtung V. In der Ausführungsform der Figuren 10 bis 12 ist die Betätigungsachse 76 etwa parallel zu einer Längsachse der Parksperrenklinke 24'" ausgerichtet. Die Betätigungsachse 76 kann jedoch auch um 90° versetzt hierzu ausgerichtet sein.

Die Parksperrenklinke 24'" ist mittels einer Vorspannfeder 78 in die Freigabeposition F vorgespannt, derart, dass die Parksperrenklinke 24'" mit ihrem Rücken gegen einen Vorspannanschlag 79 anschlägt, der gehäusefest ausgebildet ist.

Der Gehäuseabschnitt 74 weist parallel zu der Richtung R einen Gehäuseneutralabschnitt 80 und einen Gehäuseeinrückabschnitt 82 auf, zwischen denen ein Gehäusezwischenabschnitt 84 angeordnet ist. Die Abschnitte 80, 82, 84 sind vorzugsweise jeweils annähernd parallel zu der Betätigungsachse 76 ausgerichtet.

Mit dem Betätigungsglied 32'" ist ein Anschlagelement 42'" gekoppelt, und zwar über eine schematisch angedeutete Kopplung 86, die starrer Art sein kann, die jedoch auch durch eine Führung oder dergleichen gebildet sein kann.

In Fig. 10 ist die Parksperrenklinke 24'" in einer Freigabeposition F gezeigt. Das Betätigungsglied 32'" befindet sich in einer Neutralposition. Der Betätigungskeil 72 ist über die Einrückfeder 34'" im entspannten Zustand mit dem Glied 32'" gekoppelt. Der Betätigungskeil 72 liegt an dem Gehäuseabschnitt 74 im Bereich des Gehäuseneutralabschnittes 80 an oder ist diesem Gehäuseneutralabschnitt 80 zugeordnet. In der Freigabeposition F befindet sich das Anschlag-element 42'" außerhalb eines Eingriffsbereiches mit der Parksperrenklinke 24"', so dass diese von dem Anschlagelement 42'" nicht beeinflusst wird. Zum Versetzen der Parksperrenanordnung 10'" in die Parksperrenstellung wird das Betätigungsglied 32'" in der Fig. 10 in Richtung R nach rechts mittels des Antriebsgliedes 66 angetrieben. Hierbei wird der Betätigungskeil 72 zunächst von einem Übergang von dem Gehäuseneutralabschnitt 80 zu dem Gehäusezwischenabschnitt 84 quer bzw. radial, das heißt in etwa parallel zu der Verschwenkrichtung V in Richtung hin zu dem Parksperren rad 12 ausgelenkt.

Bei weiterer Bewegung des Betätigungsgliedes 32'" in eine Einrückposition E (siehe Fig. 12) gelangt der Betätigungskeil 72 zwischen den Gehäuseeinrückabschnitt 82 und einen einen nicht näher bezeichneten Rücken der Parksperrenklinke 24"'. Die Einrückfeder 34'" ist so ausgebildet, dass sie, im Wesentlichen ohne komprimiert zu werden, den Betätigungskeil 72 in diese Position drückt, so dass die Parksperrenklinke 24'" in der Richtung der Parksperrenposition P ausgelenkt wird, wobei die Vorspannfeder 78 komprimiert wird. In der Parksperrenposition P greift der nicht näher bezeichnete Klinkenzahn 28 in eine nicht näher bezeichnete Zahnlücke 18 des Parksperrenrades 12, wie bei den Ausführungsformen zuvor. Wenn bei diesem Vorgang eine Situation von Zahn-auf-Zahn vorliegt, wird zwar das Betätigungsglied 32'" dennoch in die Einrückposition E bewegt. Die Parksperrenklinke 24'" lässt sich jedoch nicht in Verschwenkrichtung V in Richtung der Parksperrenposition P auslenken, so dass die Einrückfeder 34'" komprimiert wird, wie es in Fig. 11 dargestellt ist. In diesem Zustand verbleibt der Betätigungskeil 72 in einer Zwischenposition Z in Zuordnung zu dem Gehäusezwischenabschnitt 84. In dieser Position befindet sich nun das Anschlagelement 42'" in einer Position, bei der es eine Auslenkung der Parksperrenklinke 24'" aus der in Fig. 11 dargestellten Auflageposition A in Richtung der Freigabeposition F auf einen kleinen Verschwenkweg begrenzt, der in Fig. 11 bei 46 dargestellt ist. Mit anderen Worten lässt sich in diesem Zustand die Parksperrenklinke 24'" nicht mehr in die Freigabeposition F bewegen. Die maximal in Richtung der Freigabeposition F erreichbare Anschlagposition B ist in Fig. 11 ebenfalls schematisch durch gestrichelte Linien angedeutet.

Die Anschlagposition A kann zum einen im Stillstand des Fahrzeuges eingerichtet sein, wenn eine Situation Zahn-auf-Zahn vorliegt. Die Anschlagposition A kann sich jedoch auch ergeben, wenn aufgrund eines Fehlers während der Fahrt des Fahrzeugs das Antriebsglied 66 angetrieben wird, um das Betätigungsglied 32'" in Richtung der Einrückposition E zu bewegen. In diesem Fall findet, wie oben generell im Bezug auf die Figuren 1 bis 4 beschrieben, ein ständiges Abweisen der Parksperrenklinke von den Zahnflanken des Parksperrenrades 12 statt. Die Parksperrenklinke 24'" kann jedoch maximal um den Anschlagweg 46 ausgelenkt werden, so dass ein Eintauchen in eine der Zahnlücken vermieden wird, jedenfalls bei den für das jeweilige Fahrzeug üblichen Fahrzeuggeschwindigkeiten.

Bei der nicht erfindungsgemäßen Parksperrenanordnung 10'" der Figuren 10 bis 12 ist das Anschlagelement 42'" parallel versetzt zu der Betätigungsachse 76 angeordnet.

In den Figuren 13 bis 15 ist eine weitere Ausführungsform einer nicht erfindungsgemäßen Parksperrenanordnung 10^{IV} gezeigt, die hinsichtlich Aufbau und Funktionsweise generell der Parksperrenanordnung 101" der Figuren 10 bis 12 entspricht. Gleiche Elemente sind daher durch gleiche Bezugszeichen gekennzeichnet. Im Folgenden werden im Wesentlichen die Unterschiede erläutert. Bei der Parksperrenanordnung 10^{IV} ist das Betätigungsglied 32'" mit einem Anschlagelement 42^{IV} gekoppelt, insbesondere starr verbunden, bzw. über eine Kopplung 86, die sich durch die Einrückfeder 34'" und durch das Übertragungsglied 70 hindurch erstreckt, derart, dass das An-schlagelement 42^{IV} auf der der Einrückfeder 34'" axial gegenüberliegenden Seite des Übertragungsgliedes 70 angeordnet ist.

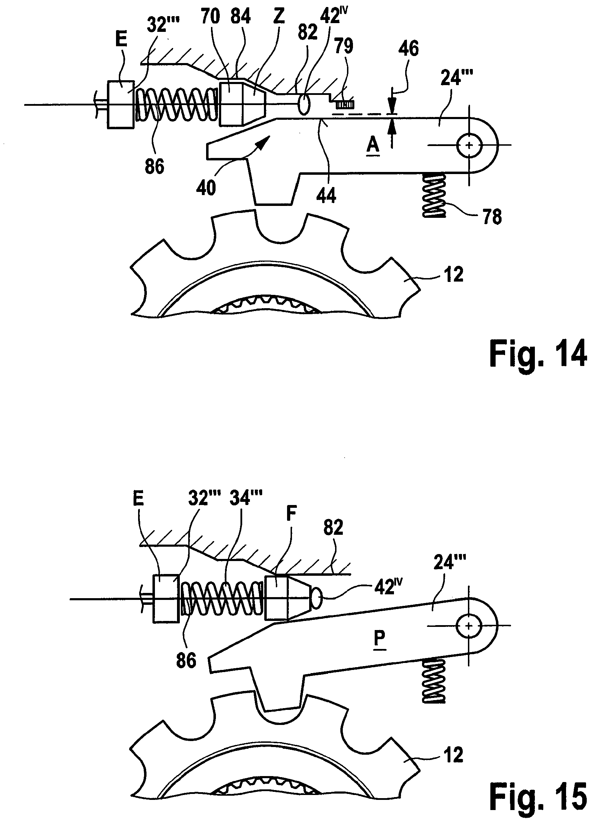

In der Freigabeposition F ist das Anschlagelement 42^{IV} außer Funktion und befindet sich außerhalb des Eingriffsbereiches der Parksperrenklinke 24"'. In der in Fig. 15 gezeigten Parksperrenposition P ist das Anschlagelement 42^{IV} ebenfalls funktionslos. In der in Fig. 14 gezeigten Auflageposition A befindet sich das Anschlagelement 42^{IV} zwischen dem Gehäuseeinrückabschnitt 82 und dem Rücken der Parksperrenklinke 24"', derart, dass eine Verschwenkbewegung der Parksperrenklinke 24"' aus der gezeigten Auflageposition A in Richtung der Freigabeposition F bis zu einer Anschlagposition begrenzt ist, wobei der zugeordnete Anschlagweg 46 in Fig. 14 schematisch angedeutet ist.

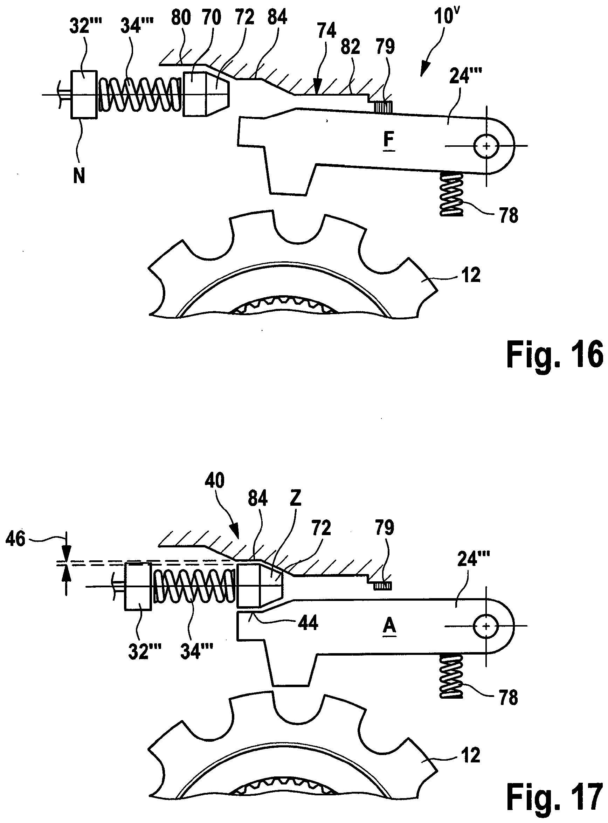

In den Figuren 16 bis 18 ist eine weitere Ausführungsform einer nicht erfindungsgemäßen Parksperrenanordnung 10^{V} gezeigt, die hinsichtlich Aufbau und Funktionsweise generell der Parksperrenanordnung 10^{IV} der Figuren 13 bis 15 entspricht. Gleiche Elemente sind daher durch gleiche Bezugszeichen gekennzeichnet. Im Folgenden werden im Wesentlichen die Unterschiede erläutert. Bei der Parksperrenanordnung 10^{V} wird das Anschlagelement 42 durch das Übertragungsglied 70 selbst gebildet. In der in Fig. 17 dargestellten Position, bei der sich das Betätigungsglied 32'" in der Einrückposition E befindet und die Einrückfeder 34'" komprimiert ist, liegt der Betätigungskeil 72 zwischen dem Gehäusezwischenabschnitt 84 und einem Anschlagabschnitt 44 der Parksperrenklinke 24"', derart, dass der Ver-schwenkweg der Parksperrenklinke 24'" aus der gezeigten Auflageposition A auf einen Anschlagweg 46 beschränkt ist.

Der Anschlagabschnitt 44 ist dabei vorzugsweise so ausgebildet, dass er in der Auflageposition A in etwa parallel zu dem Gehäusezwischenabschnitt 84 ausgerichtet ist, wobei der Betätigungskeil 72 ferner einen parallel zur Betätigungsachse 76 verlaufenden Abschnitt aufweist, der zwischen diesen parallelen Abschnitten angeordnet ist, so dass diese Zwischenposition Z des Übertragungselementes 70 dauerhaft eingerichtet sein kann, ohne Gefahr, dass der Betätigungskeil 72 in axialer Richtung aus dieser Position herausgedrückt wird.

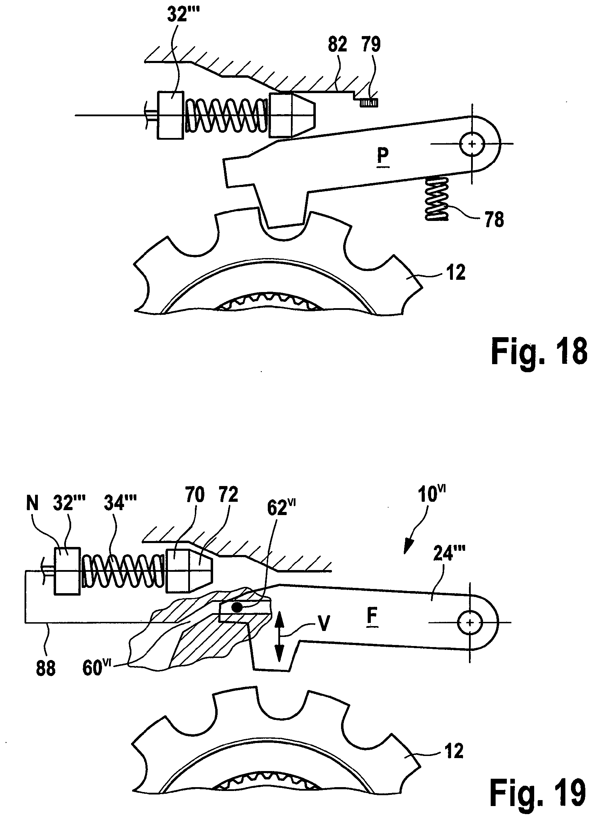

Eine weitere Ausführungsform einer nicht erfindungsgemäßen Parksperrenanordnung 10^{VI} ist in den Figuren 19 bis 21 gezeigt. Hierbei ist das Betätigungsglied 32'" mit einem nicht näher bezeichneten Kulissenelement gekoppelt, und zwar über eine Kopplung 88. Das nicht näher bezeichnete Kopplungselement richtet eine Kulisse 60^{VI} ein, in die ein Kulissenstift 62^{VI} greifen kann, der starr mit der Parksperrenklinke 24'" verbunden ist.

In der in Fig. 19 gezeigten Freigabeposition F befindet sich dieser Kulissenstift 62^{VI} derart innerhalb der Kulisse 60^{VI}, dass Verschwenkbewegungen V der Parksperrenklinke 24'" in Richtung der Parksperrenposition P formschlüssig unterbunden sind. Vorzugsweise ist die Kulisse 60^{VI} so ausgebildet, dass auch ein Verschwenken in der entgegengesetzten Richtung unterbunden ist.

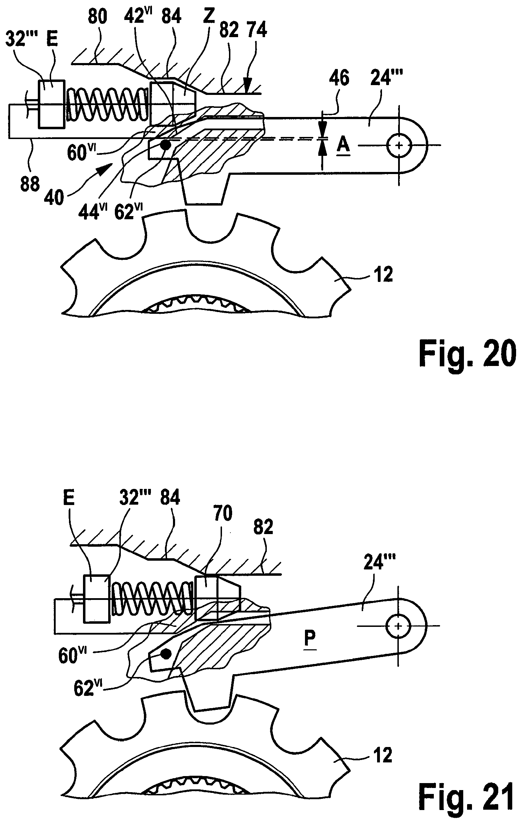

Sobald aus dieser Freigabeposition F das Betätigungsglied 32'" aus der Neutralposition N in Richtung der Einrückposition E bewegt wird, gleitet nicht nur der Betätigungskeil 72 entlang des Gehäuseabschnittes 74. Auch der Kulissenstift 62^{VI} gleitet hierbei innerhalb der Kulisse 60^{VI}, derart, dass die Parksperrenklinke 24'" zwangsweise in Richtung der Parksperrenposition P bewegt wird. Die Kulisse 60^{VI} ist dabei so ausgestaltet, dass sie die Parksperrenklinke 24'" formschlüssig in Richtung der Parksperrenposition P bis hin zu der Auflageposition A führt. Ab diesem Zeitpunkt, der der Situation in Fig. 20 entspricht, greift der Betätigungskeil 72 an dem Rücken der Parksperrenklinke 24'" an, um diese aus der Auflageposition A in Richtung der Parksperrenposition P zu bewegen, wobei der Betätigungskeil 72 wiederum zwischen dem Gehäuseabschnitt 74 und der Parksperrenklinke 24'" angeordnet ist, wie bei den vorherigen Ausführungsformen.

In der in Fig. 20 gezeigten Auflageposition A wird ein Auslenken der Parksperrenklinke 24'" in Richtung hin zu der Freigabeposition F wiederum begrenzt, und zwar durch einen Abschnitt der Kulisse 60^{VI}, die folglich ein Anschlagelement 42^{VI} bildet. Der maximale Anschlagweg ist in Fig. 20 wiederum bei 46 dargestellt.

Bei den Parksperrenanordnungen der Figuren 10 bis 18 wird dann, wenn das Betätigungsglied 32'" aus der Einrückposition E zurück in die Neutralposition N bewegt wird, die Parksperrenklinke 24'" jeweils mittels der Vorspannfeder 78 in die Freigabeposition F zurückbewegt. Bei der Ausführungsform der Figuren 19 bis 21 gelangt bei einer Zurückbewegung des Betätigungsgliedes 32'" aus der Einrückposition E in in die Neutralposition N der Kulissenstit 62^{VI} wiederum in die Kulisse 60^{VI}, derart, dass die Parksperrenklinke 24'" durch die Kulisse 60^{VI} zwangsweise aus der Parksperrenposition P in Richtung der Freigabeposition F bewegt wird. Bei Erreichen der Auflageposition A geht die Kulisse 60^{VI} von dem geraden Abschnitt 42^{VI} in einen schrägen Abschnitt über, mittels dessen eine Bewegung der Parksperrenklinke 24'" dann weiter in die Freigabeposition F ermöglicht ist.

## Patentansprüche

1. Parksperrenanordnung (10') für ein Kraftfahrzeuggetriebe mit
- einem Parksperrenrad (12), das eine Verzahnung mit Zähnen (16) und Zahnlücken (18) aufweist,
- einer Parksperrenklinke (24), die einen Klinkenzahn (28) aufweist, der zur Einrichtung einer Parksperrenposition (P) in eine Zahnlücke (18) greifen kann, und
- einem Betätigungsmechanismus (30), der ein Betätigungsglied (32') zum Betätigen der Parksperrenklinke (24') von einer Freigabeposition (F) der Parksperrenklinke (24') in die Parksperrenposition (P) aufweist, wobei das Betätigungsglied (32') über eine Einrückfeder (34') mit der Parksperrenklinke (24') gekoppelt ist, wobei die Einrückfeder (34') zum Einrichten der Parksperrenposition (P) Energie speichert, falls der Klinkenzahn (28) in einer Auflageposition (A) der Parksperrenklinke (24') auf einem Zahn (16) des Parksperrenrads (12) aufliegt, wobei eine Anschlageinrichtung (40') eine Verschwenkbewegung der Parksperrenklinke (24') aus der Auflageposition (A) in Richtung der Freigabeposition (F) bis zu einer Anschlagposition (B) begrenzt, wobei die Anschlageinrichtung (40') eine Auslenkung der Parksperrenklinke von dem Parksperrenrad (12) weg begrenzt **dadurch gekennzeichnet, dass** die Anschlageinrichtung (40') an der Parksperrenklinke (24') in Form eines Anschlagabschnitts (44') ausgebildet ist, der in der Anschlagposition (B) an einem Anschlagelement (42') anliegt,
wobei das Betätigungsglied eine Betätigungswelle (32') ist, an der ein Übertragungsglied (70) in Form eines Betätigungsnockens (50) begrenzt verdrehbar gelagert ist, wobei eine Einrückfeder (34') zwischen der Betätigungswelle (32') und dem Betätigungsnocken (50) wirkt, das Anschlagelement als Anschlagnocken (42') ausgebildet ist, der starr mit der Betätigungswelle (32') verbunden ist und der Anschlagnocken (42') axial benachbart zu dem Betätigungsnocken (50) angeordnet ist.

2. Parksperrenanordnung nach Anspruch 1, **dadurch gekennzeichnet, dass** der Verschwenkweg (46) von der Auflageposition (A) bis zu der Anschlagposition (B) kleiner ist als der Verschwenkweg (20) von der Auflageposition (A) in die Parksperrenposition (P).

3. Parksperrenanordnung nach Anspruch 1 oder 2, **dadurch gekennzeichnet, dass** der Verschwenkweg (46) von der Auflageposition (A) bis zu der Anschlagposition (B) kleiner ist als 10 mm, insbesondere kleiner als 5 mm.

## Claims

1. Park locking assembly (10') for a motor vehicle transmission with
- a park locking gear (12) which has a toothing system with teeth (16) and tooth gaps (18),
- a park locking pawl (24) which has a pawl tooth (28) which can engage into a tooth gap (18) in order to set up a park locking position (P), and
- an actuating mechanism (30) which has an actuating member (32') for actuating the park locking pawl (24') from a released position (F) of the park locking pawl (24') into the park locking position (P), the actuating member (32') being coupled via an engagement spring (34') to the park locking pawl (24'), the engagement spring (34') storing energy for setting up the park locking position (P) if the pawl tooth (28) lies on a tooth (16) of the park locking gear (12) in a bearing position (A) of the park locking pawl (24'), a stop device (40') limiting a pivoting movement of the park locking pawl (24') out of the bearing position (A) in the direction of the released position (F) as far as a stop position (B), the stop device (40') limiting a deflection of the park locking pawl away from the park locking gear (12), **characterized in that** the stop device (40') is configured on the park locking pawl (24') in the form of a stop section (44') which bears against a stop element (42') in the stop position (B),
the actuating member being an actuating shaft (32'), on which a transmission member (70) in the form of an actuating cam (50) is mounted such that it can be rotated to a limited extent, an engagement spring (34') acting between the actuating shaft (32') and the actuating cam (50), the stop element being configured as a stop cam (42') which is connected rigidly to the actuating shaft (32'), and the stop cam (42') being arranged axially adjacently with respect to the actuating cam (50).

2. Park locking assembly according to Claim 1, **characterized in that** the pivoting travel (46) from the bearing position (A) as far as the stop position (B) is smaller than the pivoting travel (20) from the bearing position (A) into the park locking position (P).

3. Park locking assembly according to Claim 1 or 2, **characterized in that** the pivoting travel (46) from the bearing position (A) as far as the stop position (B) is smaller than 10 mm, in particular smaller than 5 mm.

## Revendications

1. Système de frein de stationnement (10') pour une transmission de véhicule automobile, comprenant
- un pignon de frein de stationnement (12) qui présente une denture avec des dents (16) et des espaces entre-dents (18),
- un cliquet de frein de stationnement (24) qui présente une dent de cliquet (28) qui peut s'engager dans un espace entre-dents (18) pour l'enclenchement d'une position de frein de stationnement (P), et
- un mécanisme d'actionnement (30) qui présente un organe d'actionnement (32') pour l'actionnement du cliquet de frein de stationnement (24') d'une position de libération (F) du cliquet de frein de stationnement (24') à la position de frein de stationnement (P), l'organe d'actionnement (32') étant accouplé au cliquet de frein de stationnement (24') par le biais d'un ressort d'embrayage (34'), le ressort d'embrayage (34') accumulant de l'énergie pour l'enclenchement de la position de frein de stationnement (P) au cas où la dent de cliquet (28) repose dans une position d'appui (A) du cliquet de frein de stationnement (24') sur une dent (16) du pignon de frein de stationnement (12), un dispositif de butée (40') limitant un mouvement de pivotement du cliquet de frein de stationnement (24') hors de la position d'appui (A) dans la direction de la position de libération (F) jusqu'à une position de butée (B), le dispositif de butée (40') limitant une déviation du cliquet de frein de stationnement à l'écart du pignon de frein de stationnement (12),
**caractérisé en ce que**
le dispositif de butée (40') est réalisé au niveau du cliquet de frein de stationnement (24') sous la forme d'une portion de butée (44') qui s'appuie dans la position de butée (B) contre un élément de butée (42'), l'organe d'actionnement étant un arbre d'actionnement (32') au niveau duquel un organe de transfert (70) sous la forme d'une came d'actionnement (50) est supporté de manière déplaçable dans une mesure limitée, un ressort d'embrayage (34') agissant entre l'arbre d'actionnement (32') et la came d'actionnement (50), l'élément de butée étant réalisé sous forme de came de butée (42') qui est connectée rigidement à l'arbre d'actionnement (32') et la came de butée (42') étant disposée axialement à côté de la came d'actionnement (50).

2. Système de frein de stationnement selon la revendication 1, **caractérisé en ce que** la course de pivotement (46) de la position d'appui (A) jusqu'à la position de butée (B) est inférieure à la course de pivotement (20) de la position d'appui (A) jusqu'à la position de frein de stationnement (P).

3. Système de frein de stationnement selon la revendication 1 ou 2, **caractérisé en ce que** la course de pivotement (46) de la position d'appui (A) jusqu'à la position de butée (B) est inférieure à 10 mm, en particulier inférieure à 5 mm.
